(19) Europäisches Patentamt
European Patent Office
Office européen des brevets

(11) **EP 4 365 008 A1**

(12) **EUROPEAN PATENT APPLICATION**
published in accordance with Art. 153(4) EPC

(43) Date of publication:
**08.05.2024 Bulletin 2024/19**

(21) Application number: **22832140.2**

(22) Date of filing: **29.06.2022**

(51) International Patent Classification (IPC):
**B60L 7/10** (2006.01)    **B60L 58/10** (2019.01)
**B60L 15/20** (2006.01)

(52) Cooperative Patent Classification (CPC):
Y02T 10/70; Y02T 10/72

(86) International application number:
**PCT/CN2022/102523**

(87) International publication number:
**WO 2023/274328 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.06.2021  CN 202110744060**

(71) Applicant: **Beijing CHJ Information Technology
Co., Ltd.
Beijing 101399 (CN)**

(72) Inventor: **LIU, Shaokang
Beijing 101399 (CN)**

(74) Representative: **advotec.
Patent- und Rechtsanwaltspartnerschaft
Tappe mbB
Widenmayerstraße 4
80538 München (DE)**

(54) **ENERGY RECOVERY CONTROL METHOD AND APPARATUS**

(57)    An energy recovery control method and apparatus. The energy recovery control method comprises: after receiving a braking request of a vehicle, determining an allowable energy recovery power and a target energy recovery power, which correspond to a target vehicle, wherein the braking request contains a target braking torque; and determining that the allowable energy recovery power is less than the target energy recovery power, requesting, according to an allowable thermal power corresponding to a target drive electric motor, that a target electric motor controller controls the target drive electric motor to perform energy recovery, and requesting that the target electric motor controller controls the target drive electric motor to output the target braking torque, wherein the sum of the allowable thermal power and the allowable energy recovery power is greater than or equal to the target energy recovery power.

FIG. 1

**Description**

**CROSS REFERENCE TO RELATED APPLICATIONS**

This application is based on and claims priority to Chinese patent application No. 202110744060.4, filed on June 30, 2021, the entire contents of which are incorporated herein by reference.

**TECHNICAL FIELD**

The disclosure relates to a field of extended-range electric vehicle technologies, in particular to an energy recovery control method, an energy recovery control apparatus, a storage medium, a computer program product, and a computer program.

**BACKGROUND**

In recent years, with the continuous development of society and the continuous improvement of people's living standards, people's demand for vehicles is also increasing. Due to energy shortages and the increasingly serious environmental pollution problems caused by traditional vehicles, electric-powered vehicles have been developed. Although pure electric vehicles have characteristics of zero emission and zero pollution, due to the inability to effectively increase an energy density of power cells at this stage, a cruising range of pure electric vehicles cannot satisfy people's needs, and the extended-range electric vehicles can solve this problem to a certain extent.

After the extended-range electric vehicle turns on an adaptive cruise function or a pilot assist function, the extended-range electric vehicle controls a vehicle speed through a Vehicle Longitudinal Control (VLC) module. That is, the VLC module calculates a driving torque and a braking torque according to a target acceleration, a current vehicle speed and other parameters.

Nowadays, a drive motor is usually used to provide the braking torque for the VLC module. However, when a sum of an allowable charging power and a load power consumption of the power cell is less than a braking power required by the VLC module, the drive motor cannot provide the VLC module with the braking torque that satisfies the demand due to limitations on energy recovery power. Therefore, when the sum of the allowable charging power and the load power consumption of the power cell is less than the braking power required for the VLC module, it is crucial to provide the VLC module with the braking torque that satisfies the demand through the drive motor.

**SUMMARY**

Embodiments of the disclosure provide an energy recovery control method, an energy recovery control apparatus, a storage medium, a computer program product, and a computer program, which mainly aims to provide the VLC module with the braking torque that satisfies the demand through the drive motor under any circumstances.

In order to solve the above technical problems, embodiments of the disclosure provide the following technical solutions.

According to a first aspect, embodiments of the disclosure provide an energy recovery control method. The method includes:

in response to receiving a braking request from a vehicle, determining an allowable energy recovery power and a target energy recovery power corresponding to a target vehicle, in which the braking request includes a target braking torque; and
in response to determining that the allowable energy recovery power is less than the target energy recovery power, requesting a target motor controller to control a target drive motor to perform energy recovery according to an allowable thermal power corresponding to the target drive motor, and requesting the target motor controller to control the target drive motor to output the target braking torque, in which a sum of the allowable thermal power and the allowable energy recovery power is greater than or equal to the target energy recovery power.

In some embodiments, determining the allowable energy recovery power corresponding to the target vehicle, includes:

obtaining a power cell allowable charging power and a load power consumption corresponding to the target vehicle; and
calculating the allowable energy recovery power corresponding to the target vehicle according to the power cell allowable charging power and the load power consumption.

In some embodiments, determining the target energy recovery power corresponding to the target vehicle, includes:

obtaining drive motor parameters corresponding to the target drive motor, in which the drive motor parameters include a motor actual torque value, a motor actual rotation speed value and a maximum energy recovery efficiency corresponding to the target drive motor; and

calculating the target energy recovery power corresponding to the target vehicle by substituting the motor actual torque value, the motor actual rotation speed value and the maximum energy recovery efficiency corresponding to the target drive motor into a first preset equation.

In some embodiments, before requesting the target motor controller to control the target drive motor to perform energy recovery according to the allowable thermal power corresponding to the target drive motor, the method includes: determining the allowable thermal power and an actual thermal power corresponding to the target drive motor.

In some embodiments, in a case that the allowable thermal power is greater than or equal to the actual thermal power, requesting the target motor controller to control the target drive motor to perform energy recovery according to the allowable thermal power corresponding to the target drive motor, includes:

calculating a target energy recovery efficiency corresponding to the target drive motor by substituting the motor actual torque value, the motor actual rotation speed value, the maximum energy recovery efficiency corresponding to the target drive motor and the allowable energy recovery power into a second preset equation; and

requesting the target motor controller to control the target drive motor to perform energy recovery according to the target energy recovery efficiency.

In some embodiments, in a case that the target vehicle contains one target drive motor, the second preset equation is provided as follows:

$$\eta 1r = 1 - \frac{T1 * n1 * \eta 1 - 9550 * P}{9550 * T1 * n1}$$

where, $\eta 1r$ is the target energy recovery efficiency corresponding to the target drive motor, $T1$ is the motor actual torque value corresponding to the target drive motor, $n1$ is the motor actual rotation speed value corresponding to the target drive motor, $\eta 1$ is the maximum energy recovery efficiency corresponding to the target drive motor, and $P$ is the allowable energy recovery power corresponding to the target vehicle;

in a case that the target vehicle contains 2 target drive motors, 3 target drive motors, or 4 target drive motors, the second preset equation is provided as follows:

$$\eta 1r = 1 - \frac{(T1 * n1 * \eta 1 + T2 * n2 * \eta 2 - 9550 * P) * Pct}{9550 * T1 * n1}$$

$$\eta 2r = 1 - \frac{(T1 * n1 * \eta 1 + T2 * n2 * \eta 2 - 9550 * P) * (100\% - Pct)}{19100 * T2 * n2}$$

where, $\eta 1r$ is a target energy recovery efficiency corresponding to any front-axle target drive motor, $T1$ is a sum of motor actual torque values corresponding to front-axle target drive motors, $n1$ is an average motor actual rotation speed value corresponding to the front-axle target drive motors, $\eta 1$ is a maximum energy recovery efficiency corresponding to any front-axle target drive motor, $\eta 2r$ is a target energy recovery efficiency corresponding to any rear-axle target drive motor, $T2$ is a sum of motor actual torque values corresponding to rear-axle target drive motors, $n2$ is an average motor actual rotation speed value corresponding to the rear-axle target drive motors, $\eta 2$ is a maximum energy recovery efficiency corresponding to any rear-axle target drive motor, $P$ is the allowable energy recovery power corresponding to the target vehicle, and Pct is a front-axle motor thermal power distribution coefficient.

In some embodiments, in a case that the allowable thermal power is less than the actual thermal power, requesting the target motor controller to control the target drive motor to perform energy recovery according to the allowable thermal power corresponding to the target drive motor, includes:

requesting the target motor controller to control the target drive motor to perform energy recovery according to the allowable thermal power;

calculating a target rotation speed value corresponding to a generator;

sending a fuel cut-off request to an engine controller, so that the engine controller controls the engine to cut off fuel; and

sending a rotation speed request carrying the target rotation speed value to a generator controller, so that the generator controller controls the generator to operate at the target rotation speed value.

In some embodiments, determining the allowable thermal power corresponding to the target drive motor, includes:

obtaining heat dissipation parameters corresponding to the target drive motor, in which the heat dissipation parameters include a motor heat dissipation power, a motor thermal fusion value, a motor overheat torque reduction threshold, a motor actual temperature value and a motor overheat performance time corresponding to the target drive motor; and

calculating the allowable thermal power corresponding to the target drive motor by substituting the motor heat dissipation power, the motor thermal fusion value, the motor overheat torque reduction threshold, the motor actual temperature value and the motor overheat performance time corresponding to the target drive motor into a third preset equation.

In some embodiments, the third preset equation is provided as follows:

$$\mathrm{Pxh} = -\mathrm{Pxc} + \frac{1000 * \mathrm{Cx} * (\mathrm{Kxmax} - \mathrm{Kx})}{\mathrm{Tmrx}}$$

where, Pxh is an allowable thermal power corresponding to a $x^{th}$ target drive motor, Pxc is a motor heat dissipation power corresponding to the $x^{th}$ target drive motor, Cx is a motor thermal fusion value corresponding to the $x^{th}$ target drive motor, Kxmax is a motor overheat torque reduction threshold corresponding to the $x^{th}$ target drive motor, Kx is a motor actual temperature value corresponding to the $x^{th}$ target drive motor, and Tmrx is a motor overheat performance time corresponding to the $x^{th}$ target drive motor, in which x=1, 2, 3 or 4.

In some embodiments, determining the actual thermal power corresponding to the target drive motor, includes:

calculating a difference between the target energy recovery power and the allowable energy recovery power; and

determining the difference as the actual thermal power corresponding to the target drive motor.

In some embodiments, calculating the target rotation speed value corresponding to the generator, includes:

obtaining a preconfigured transmission ratio value and a preconfigured engine reverse-drive torque curve; and

calculating the target rotation speed value by substituting the motor actual torque value, the motor actual rotation speed value, the target energy recovery efficiency, the allowable energy recovery power, the preconfigured transmission ratio value and the preconfigured engine reverse-drive torque curve into a fourth preset equation.

In some embodiments, in a case that the target vehicle contains one target drive motor, the fourth preset equation is provided as follows:

$$\mathrm{ng} = \frac{9550 * (\mathrm{T1} * \mathrm{n1} * \eta 1\mathrm{r} - \mathrm{P})}{\mathrm{i} * \mathrm{f}(\mathrm{ne})}$$

where, ng is the target rotation speed value corresponding to the motor, T1 is the motor actual torque value corresponding to the target drive motor, n1 is the motor actual rotation speed value corresponding to the target drive motor, $\eta 1r$ is the target energy recovery efficiency corresponding to the target drive motor, P is the allowable energy recovery power corresponding to the target vehicle, i is the preconfigured transmission ratio value, and f (ne) is the preconfigured engine reverse-drive torque curve; in which,

in a case that the target vehicle contains 2 target drive motors, 3 target drive motors, or 4 target drive motors, the fourth preset equation is provided as follows:

$$ng = \frac{9550 * （T1 * n1 * \eta1r + T2 * n2 * \eta2r - P）}{i * f（ne）}$$

where, ng is the target rotation speed value corresponding to the motor, T1 is a sum of motor actual torque values corresponding to front-axle target drive motors, n1 is an average motor actual rotation speed value corresponding to the front-axle target drive motors, $\eta1r$ is a target energy recovery efficiency corresponding to any front-axle target drive motor, T2 is a sum of motor actual torque values corresponding to rear-axle target drive motors, n2 is an average motor actual rotation speed value corresponding to the rear-axle target drive motors, $\eta2r$ is a target energy recovery efficiency corresponding to any rear-axle target drive motor, P is the allowable energy recovery power corresponding to the target vehicle, i is the preconfigured transmission ratio value, and f (ne) is the preconfigured engine reverse-drive torque curve.

According to a second aspect of embodiments of the disclosure, an energy recovery control apparatus is provided. The apparatus includes:

a first determining unit, configured to determine an allowable energy recovery power and a target energy recovery power corresponding to a target vehicle in response to receiving a braking request from a vehicle, in which the braking request includes a target braking torque; and
a requesting unit, configured to, in response to determining that the allowable energy recovery power is less than the target energy recovery power, request a target motor controller to control a target drive motor to perform energy recovery according to an allowable thermal power corresponding to the target drive motor, and request the target motor controller to control the target drive motor to output the target braking torque, in which a sum of the allowable thermal power and the allowable energy recovery power is greater than or equal to the target energy recovery power.

In some embodiments, the first determining unit includes:

a first obtaining module, configured to obtain a power cell allowable charging power and a load power consumption corresponding to the target vehicle; and
a first calculating module, configured to calculate the allowable energy recovery power corresponding to the target vehicle according to the power cell allowable charging power and the load power consumption.

In some embodiments, the first determining unit includes:

a second obtaining module, configured to obtain drive motor parameters corresponding to the target drive motor, in which the drive motor parameters include a motor actual torque value, a motor actual rotation speed value and a maximum energy recovery efficiency corresponding to the target drive motor; and
a second calculating module, configured to calculate the target energy recovery power corresponding to the target vehicle by substituting the motor actual torque value, the motor actual rotation speed value and the maximum energy recovery efficiency corresponding to the target drive motor into a first preset equation.

In some embodiments, the apparatus further includes:
a second determining unit, configured to determine the allowable thermal power and an actual thermal power corresponding to the target drive motor before the requesting unit requests the target motor controller to control the target drive motor to perform energy recovery according to the allowable thermal power corresponding to the target drive motor.
In some embodiments, the requesting unit includes:

a third calculating module, configured to, in a case that the allowable thermal power is greater than or equal to the actual thermal power, calculate a target energy recovery efficiency corresponding to the target drive motor by substituting the motor actual torque value, the motor actual rotation speed value and the maximum energy recovery efficiency corresponding to the target drive motor, and the allowable energy recovery power into a second preset equation; and
a first requesting module, configured to request the target motor controller to control the target drive motor to perform energy recovery according to the target energy recovery efficiency.

In some embodiments, in a case that the target vehicle contains one target drive motor, the second preset equation is provided as follows:

$$\eta 1r = 1 - \frac{T1 * n1 * \eta 1 - 9550 * P}{9550 * T1 * n1}$$

where, $\eta 1r$ is the target energy recovery efficiency corresponding to the target drive motor, T1 is the motor actual torque value corresponding to the target drive motor, n1 is the motor actual rotation speed value corresponding to the target drive motor, $\eta 1$ is the maximum energy recovery efficiency corresponding to the target drive motor, and P is the allowable energy recovery power corresponding to the target vehicle;

in a case that the target vehicle contains 2 target drive motors, 3 target drive motors, or 4 target drive motors, the second preset equation is provided as follows:

$$\eta 1r = 1 - \frac{(T1 * n1 * \eta 1 + T2 * n2 * \eta 2 - 9550 * P) * Pct}{9550 * T1 * n1}$$

$$\eta 2r = 1 - \frac{(T1 * n1 * \eta 1 + T2 * n2 * \eta 2 - 9550 * P) * (100\% - Pct)}{19100 * T2 * n2}$$

where, $\eta 1r$ is a target energy recovery efficiency corresponding to any front-axle target drive motor, T1 is a sum of motor actual torque values corresponding to front-axle target drive motors, n1 is an average motor actual rotation speed value corresponding to the front-axle target drive motors, $\eta 1$ is a maximum energy recovery efficiency corresponding to any front-axle target drive motor, $\eta 2r$ is a target energy recovery efficiency corresponding to any rear-axle target drive motor, T2 is a sum of motor actual torque values corresponding to rear-axle target drive motors, n2 is an average motor actual rotation speed value corresponding to the rear-axle target drive motors, $\eta 2$ is a maximum energy recovery efficiency corresponding to any rear-axle target drive motor, P is the allowable energy recovery power corresponding to the target vehicle, and Pct is a front-axle motor thermal power distribution coefficient.

In some embodiments, the requesting unit includes:

a second requesting module, configured to, in a case that the allowable thermal power is less than the actual thermal power, request the target motor controller to control the target drive motor to perform energy recovery according to the allowable thermal power;
a fourth calculating module, configured to calculate a target rotation speed value corresponding to a generator;
a first sending module, configured to send a fuel cut-off request to an engine controller, so that the engine controller controls an engine to cut off fuel; and
a second sending module, configured to send a rotation speed request carrying the target rotation speed value to a generator controller, so that the generator controller controls the generator to operate at the target rotation speed value.

In some embodiments, the second determining unit includes:

a third obtaining module, configured to obtain heat dissipation parameters corresponding to the target drive motor, in which the heat dissipation parameters include a motor heat dissipation power, a motor thermal fusion value, a motor overheat torque reduction threshold, a motor actual temperature value and a motor overheat performance time corresponding to the target drive motor; and
a fifth calculating module, configured to calculate the allowable thermal power corresponding to the target drive motor by substituting the motor heat dissipation power, the motor thermal fusion value, the motor overheat torque reduction threshold, the motor actual temperature value and the motor overheat performance time corresponding to the target drive motor into a third preset equation.

In some embodiments, the third preset equation is provided as follows:

$$Pxh = -Pxc + \frac{1000 * Cx * (Kxmax - Kx)}{Tmrx}$$

where, Pxh is an allowable thermal power corresponding to a $x^{th}$ target drive motor, Pxc is a motor heat dissipation power corresponding to the $x^{th}$ target drive motor, Cx is a motor thermal fusion value corresponding to the $x^{th}$ target drive motor, Kxmax is a motor overheat torque reduction threshold corresponding to the $x^{th}$ target drive motor, Kx is a motor actual temperature value corresponding to the $x^{th}$ target drive motor, and Tmrx is a motor overheat performance time corresponding to the $x^{th}$ target drive motor, in which x=1, 2, 3 or 4.

In some embodiments, the second determining unit includes:

a sixth calculating module, configured to calculate a difference between the target energy recovery power and the allowable energy recovery power; and
a determining module, configured to determine the difference as the actual thermal power corresponding to the target drive motor.

In some embodiments, the fourth calculating module is configured to: obtain a preconfigured transmission ratio value and a preconfigured engine reverse-drive torque curve; and calculate the target rotation speed value by substituting the motor actual torque value, the motor actual rotation speed value, the target energy recovery efficiency, the allowable energy recovery power, the preconfigured transmission ratio value and the preconfigured engine reverse-drive torque curve into a fourth preset equation.

In some embodiments, in a case that that the target vehicle contains one target drive motor, the fourth preset equation is provided as follows:

$$ng = \frac{9550 * （T1 * n1 * \eta 1r - P）}{i * f （ne）}$$

where, ng is the target rotation speed value corresponding to the motor, T1 is the motor actual torque value corresponding to the target drive motor, n1 is the motor actual rotation speed value corresponding to the target drive motor, $\eta 1r$ is the target energy recovery efficiency corresponding to the target drive motor, P is the allowable energy recovery power corresponding to the target vehicle, i is the preconfigured transmission ratio value, and f (ne) is the preconfigured engine reverse-drive torque curve; in which,
in a case that the target vehicle contains 2 target drive motors, 3 target drive motors, or 4 target drive motors, the fourth preset equation is provided as follows:

$$ng = \frac{9550 * （T1 * n1 * \eta 1r + T2 * n2 * \eta 2r - P）}{i * f （ne）}$$

where, ng is the target rotation speed value corresponding to the motor, T1 is a sum of motor actual torque values corresponding to front-axle target drive motors, n1 is an average motor actual rotation speed value corresponding to the front-axle target drive motors, $\eta 1r$ is a target energy recovery efficiency corresponding to any front-axle target drive motor, T2 is a sum of motor actual torque values corresponding to rear-axle target drive motors, n2 is an average motor actual rotation speed value corresponding to the rear-axle target drive motors, $\eta 2r$ is a target energy recovery efficiency corresponding to any rear-axle target drive motor, P is the allowable energy recovery power corresponding to the target vehicle, i is the preconfigured transmission ratio value, and f (ne) is the preconfigured engine reverse-drive torque curve..

According to a third aspect of embodiments of the disclosure, a storage medium having programs stored thereon is provided. When the programs are executed, a device where the storage medium is located is controlled to implement the energy recovery control method of the above embodiments of the first aspect.

According to a fourth aspect of embodiments of the disclosure, an energy recovery control device is provided, which includes a storage medium and one or more processors. The storage medium is coupled with the processor. The processor is configured to execute program instructions stored in the storage medium, and when the program instructions are executed, the energy recovery control method of the above embodiments of the first aspect is implemented.

According to a fifth aspect of embodiments of the disclosure, a computer program product including computer programs is provided. When the computer programs are executed by a processor, the energy recovery control method of the above embodiments of the first aspect is implemented.

According to a sixth aspect of embodiments of the disclosure, a computer program including computer program codes is provided. When the computer program codes are executed by a computer, the computer is caused to implement the energy recovery control method of the above embodiments of the first aspect.

The disclosure provides an energy recovery control method and apparatus. In the disclosure, after receiving the braking request sent by the VLC module, the target controller determines the allowable energy recovery power and the target energy recovery power corresponding to the target vehicle. When the allowable energy recovery power corresponding to the target vehicle is greater than or equal to the target energy recovery power, i.e., there is no limitation on the energy recovery power, the target controller can request the target motor controller to control the target drive motor to perform energy recovery according to its corresponding maximum energy recovery efficiency, and request the target motor controller to control the target drive motor to output the target braking torque. When the allowable energy recovery power corresponding to the target vehicle is less than the target energy recovery power, i.e., there are limitations on the energy recovery power, the target controller needs to request the target motor controller to control the target drive motor to perform energy recovery according to the allowable thermal power corresponding to the target drive motor, and requests the target motor controller to control the target drive motor to output the target braking torque. When the target controller requests the target motor controller to control the target drive motor to perform energy recovery according to the allowable thermal power corresponding to the target drive motor, the target drive motor will convert part of the energy to be recovered into electrical energy for charging the power cell and convert the other part into thermal energy for release. Therefore, when the allowable energy recovery power corresponding to the target vehicle is less than the target energy recovery power, the braking torque that satisfies the requirements can still be provided to the VLC module through the target drive motor.

The above description is only an overview of the technical solutions of the disclosure, in order to be able to more clearly understand the technical means of the disclosure that can be implemented in accordance with the contents of the disclosure, and to make the above and additional purposes, features, and advantages of the disclosure more obvious and easy to understand, the following specific implementations of the disclosure are illustrated.

## BRIEF DESCRIPTION OF THE DRAWINGS

The above and other objects, features and advantages of exemplary embodiments of the disclosure will become readily understood by reading the following detailed description with reference to the accompanying drawings. In the drawings, several implementations of the disclosure are shown by way of illustration and not limitation, and identical or corresponding reference numerals represent identical or corresponding parts, in which:

FIG. 1 is a flowchart of an energy recovery control method provided by an embodiment of the disclosure.

FIG. 2 is a flowchart of another energy recovery control method provided by an embodiment of the disclosure.

FIG. 3 is a block diagram of an energy recovery control apparatus provided by an embodiment of the disclosure.

FIG. 4 is a block diagram of another energy recovery control apparatus provided by an embodiment of the disclosure.

## DETAILED DESCRIPTION

Exemplary implementations of the disclosure will be described in detail below with reference to the accompanying drawings. Although exemplary implementations of the disclosure are shown in the accompanying drawings, it should be understood that the disclosure may be realized in various ways without being limited by the implementations set forth herein. Instead, these implementations are provided to enable a more thorough understanding of the disclosure and to convey the complete scope of the disclosure to those skilled in the art.

It should be noted that, unless otherwise stated, the technical terms or scientific terms used in this disclosure should have the usual meanings understood by those skilled in the art to which this disclosure belongs.

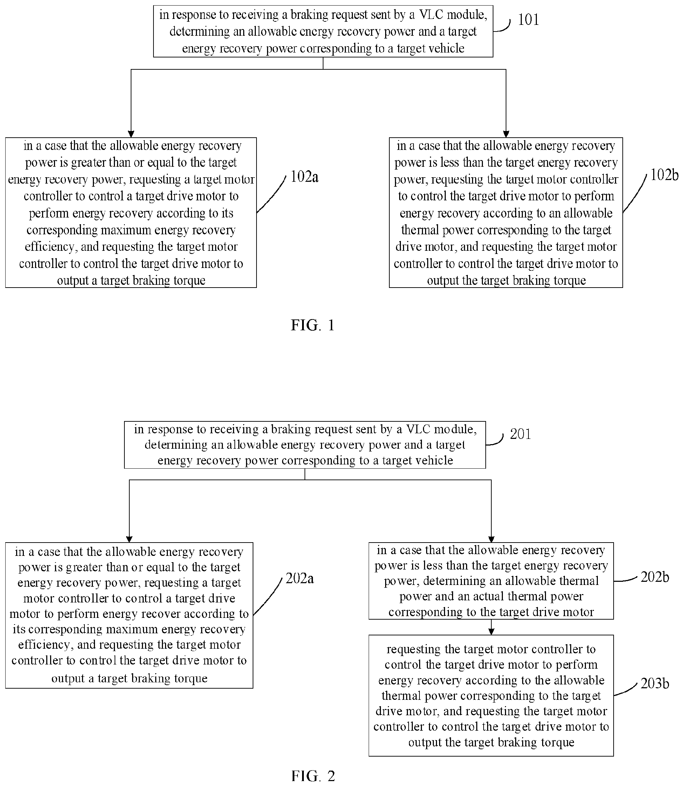

Embodiments of the disclosure provides an energy recovery control method. As illustrated in FIG. 1, the method includes the following steps.

At 101, in response to receiving a braking request sent by a VLC module, an allowable energy recovery power and a target energy recovery power corresponding to a target vehicle are determined.

In detail, the target vehicle is an extended-range electric vehicle. The target vehicle may include, but is not limited to, one drive motor, two drive motors, three drive motors, or four drive motors. The braking request includes a target braking torque. When the target vehicle contains one target drive motor, the target braking torque contained in the braking request is the target braking torque corresponding to the target drive motor. When the target vehicle contains two target drive motors, three target drive motors or four target drive motors, the braking request contains the target braking torques corresponding to each target drive motor. The allowable energy recovery power corresponding to the target vehicle is the maximum energy recovery power that is bearable for the target vehicle when the target vehicle performs energy recovery through the target drive motor, and is specifically determined according to the power cell allowable charging power corresponding to the power cell in the target vehicle and the power consumption corresponding to each load. The target energy recovery power corresponding to the target vehicle is the braking power required by the VLC module, i.e., the actual energy recovery power required by the target drive motor to perform energy recovery after the target drive motor provides the target braking torque to the VLC module.

In embodiments of the disclosure, the execution subject in each step is the target controller in the target vehicle. The target controller includes, but is not limited to, an auxiliary driving domain controller, a power domain controller, or a vehicle controller in the target vehicle.

In embodiments of the disclosure, after the target vehicle turns on the adaptive cruise function or the pilot assist function, the target vehicle controls the vehicle speed through the VLC module. When the VLC module determines that the target drive motor is required to output the target braking torque, the VLC module will send a braking request carrying the target braking torque to the target controller. At this time, the target controller receives the braking request sent by the VLC module. After receiving the braking request sent by the VLC module, the target controller needs to determine the allowable energy recovery power and the target energy recovery power corresponding to the target vehicle, in order to determine how to perform energy recovery when the target drive motor outputs the target braking torque, according to the allowable energy recovery power and the target energy recovery power corresponding to the target vehicle.

At 102a, in a case that the allowable energy recovery power is greater than or equal to the target energy recovery power, a target motor controller is requested to control the target drive motor to perform energy recovery according to its corresponding maximum energy recovery efficiency, and the target motor controller is requested to control the target drive motor to output the target braking torque.

In embodiments of the disclosure, when the allowable energy recovery power corresponding to the target vehicle is greater than or equal to the target energy recovery power, i.e., there is no limitation on the energy recovery power (the target drive motor can perform energy recovery according to its corresponding maximum energy recovery efficiency), the target controller can request the target motor controller to control the target drive motor to perform energy recovery according to its corresponding maximum energy recovery efficiency, and request the target motor controller to control the target drive motor to output the target braking torque.

In some embodiments, in this step, when the target vehicle contains one target drive motor, the target controller requests the target motor controller corresponding to the target drive motor to control the target drive motor to perform energy recovery according to its corresponding maximum energy recovery efficiency, and requests the target motor controller corresponding to the target drive motor to control the target drive motor to output the target braking torque. When the target vehicle contains 2 target drive motors, 3 target drive motors, or 4 target drive motors, the target controller needs to request the respective target motor controller corresponding to each target drive motor to control the respective target drive motor to perform energy recovery according to its corresponding maximum energy recovery efficiency, and to request the respective target motor controller corresponding to each target drive motor to control the respective target drive motor to output its corresponding target braking torque.

For embodiments of the disclosure, in 102b, which is parallel to step 102a, when the allowable energy recovery power is less than the target energy recovery power, the target motor controller is requested to control the target drive motor to perform energy recovery according to an allowable thermal power corresponding to the target drive motor, and the target motor controller is requested to control the target drive motor to output the target braking torque.

In embodiments of the disclosure, when the allowable energy recovery power corresponding to the target vehicle is less than the target energy recovery power, i.e., there are limitations on the energy recovery power, the target controller needs to request the target motor controller to control the target drive motor to perform energy recovery according to the allowable thermal power corresponding to the target drive motor, and requests the target motor controller to control the target drive motor to output the target braking torque. When the target controller requests the target motor controller to control the target drive motor to perform energy recovery according to the allowable thermal power corresponding to the target drive motor, the target drive motor will convert part of the energy to be recovered into electrical energy for charging the power cell and convert the other part into thermal energy for release. Therefore, when the allowable energy recovery power corresponding to the target vehicle is less than the target energy recovery power, the target controller can still provide the braking torque that satisfies the needs (i.e., the target braking torque) to the VLC module through the target drive motor.

In some embodiments, in this step, when the target vehicle contains one target drive motor, the target controller requests the target motor controller corresponding to the target drive motor to control the target drive motor to perform energy recovery according to the allowable thermal power corresponding to the target drive motor, and requests the target motor controller corresponding to the target drive motor to control the target drive motor to output the target braking torque. When the target vehicle contains 2 target drive motors, 3 target drive motors, or 4 target drive motors, the target controller needs to request the respective target motor controller corresponding to each target drive motor to control the respective target drive motor to perform energy recovery according to the allowable thermal power corresponding to each target drive motor, and to request the respective target motor controller corresponding to each target drive motor to control the respective target drive motor to output its corresponding target braking torque.

Embodiments of the disclosure provide an energy recovery control method. In embodiments of the disclosure, after receiving the braking request sent by the VLC module, the target controller determines the allowable energy recovery power and the target energy recovery power corresponding to the target vehicle. When the allowable energy recovery power corresponding to the target vehicle is greater than or equal to the target energy recovery power, i.e., there is no limitation on the energy recovery power, the target controller can request the target motor controller to control the target drive motor to perform energy recovery according to its corresponding maximum energy recovery efficiency, and request the target motor controller to control the target drive motor to output the target braking torque. When the allowable energy recovery power corresponding to the target vehicle is less than the target energy recovery power, i.e., there are limitations on the energy recovery power, the target controller needs to request the target motor controller to control the target drive motor to perform energy recovery according to the allowable thermal power corresponding to the target drive motor, and to request the target motor controller to control the target drive motor to output the target braking torque. When the target controller requests the target motor controller to control the target drive motor to perform energy recovery according to the allowable thermal power corresponding to the target drive motor, the target drive motor will convert part of the energy to be recovered into electrical energy for charging the power cell and convert the other part into thermal energy for release. Therefore, when the allowable energy recovery power corresponding to the target vehicle is less than the target energy recovery power, the braking torque that satisfies the requirements can still be provided to the VLC module through the target drive motor.

For more detailed explanation, embodiments of the disclosure provide another energy recovery control method, as shown in FIG. 2. The method includes the following steps.

At 201, in response to receiving a braking request sent by a VLC module, an allowable energy recovery power and a target energy recovery power corresponding to a target vehicle are determined.

In embodiments of the disclosure, after receiving the braking request sent by the VLC module, the target controller needs to determine the allowable energy recovery power and the target energy recovery power corresponding to the target vehicle.

In some embodiments, in this step, the target controller may determine the allowable energy recovery power corresponding to the target vehicle in the following way.

Firstly, the power cell allowable charging power corresponding to the power cell in the target vehicle and a load power consumption corresponding to multiple loads are determined. The load power consumption corresponding to multiple loads is a sum of power consumptions corresponding to each load. Secondly, the allowable energy recovery power corresponding to the target vehicle is calculated according to the power cell allowable charging power of the power cell and the load power consumption corresponding to multiple loads. That is, a sum of the power cell allowable charging power of the power cell and the load power consumption corresponding to multiple loads is calculated, and the sum is determined as the allowable energy recovery power corresponding to the target vehicle.

In some embodiments, in this step, the target controller may determine the target energy recovery power corresponding to the target vehicle in the following way.

Firstly, drive motor parameters corresponding to the target drive motor is obtained. The drive motor parameters corresponding to the target drive motor include a motor actual torque value, a motor actual rotation speed value and a maximum energy recovery efficiency corresponding to the target drive motor. Secondly, the target energy recovery power corresponding to the target vehicle is calculated by substituting the motor actual torque value, the motor actual rotation speed value and the maximum energy recovery efficiency corresponding to the target drive motor into a first preset equation. That is, when the target vehicle contains one target drive motor, the target energy recovery power corresponding to the target vehicle is calculated by substituting the motor actual torque value, the motor actual rotation speed value and the maximum energy recovery efficiency corresponding to the target drive motor into the corresponding first preset equation. When the target vehicle contains 2 target drive motors, 3 target drive motors, or 4 target drive motors, the target energy recovery power corresponding to the target vehicle is calculated by substituting the motor actual torque value, the motor actual rotation speed value and the maximum energy recovery efficiency corresponding to each target drive motor into the corresponding first preset equation.

When the target vehicle contains one target drive motor, the corresponding first preset equation is provided as follows:

$$A = \frac{T1 * n1 * \eta1}{9550}$$

where, A is the target energy recovery power corresponding to the target vehicle, T1 is the motor actual torque value corresponding to the target drive motor, n1 is the motor actual rotation speed value corresponding to the target drive motor, $\eta1$ is the maximum energy recovery efficiency corresponding to the target drive motor.

When the target vehicle contains 2 target drive motors, 3 target drive motors, or 4 target drive motors, the corresponding first preset equation is provided as follows:

EP 4 365 008 A1

$$A = \frac{T1*n1*\eta1 + \cdots + Tx*nx*\eta x}{9550}$$

where, A is the target energy recovery power corresponding to the target vehicle, n1 is a motor actual rotation speed value corresponding to a first target drive motor, $\eta1$ is a maximum energy recovery efficiency corresponding to the first target drive motor... Tx is a motor actual torque value corresponding to a $x^{th}$ target drive motor, nx is a motor actual rotation speed value corresponding to the $x^{th}$ target drive motor, $\eta x$ is a maximum energy recovery efficiency corresponding to the $x^{th}$ target drive motor, in which, x=2, 3 or 4.

At 202a, when the allowable energy recovery power is greater than or equal to the target energy recovery power, a target motor controller is requested to control a target drive motor to perform energy recover according to its corresponding maximum energy recovery efficiency, and the target motor controller is requested to control the target drive motor to output the target braking torque.

For step 202a, when the allowable energy recovery power is greater than or equal to the target energy recovery power, the target motor controller is requested to control the target drive motor to perform energy recover according to its corresponding maximum energy recovery efficiency, and the target motor controller is requested to control the target drive motor to output the target braking torque. Reference can be made to the description of the corresponding part in FIG. 1 and will not be repeated herein.

In embodiments of the disclosure, in step 202b, which is parallel to step 202a, when the allowable energy recovery power is less than the target energy recovery power, an allowable thermal power and an actual thermal power corresponding to the target drive motor are determined.

In embodiments of the disclosure, when the allowable energy recovery power corresponding to the target vehicle is less than the target energy recovery power, i.e., there are limitations on the energy recovery power, the target controller needs to determine the allowable thermal power and the actual thermal power corresponding to the target drive motor. That is, when the target vehicle contains one target drive motor, the target controller needs to determine the allowable thermal power and the actual thermal power corresponding to the target drive motor. When the target vehicle contains two target drive motors, three target drive motors, or four target drive motors, the target controller needs to determine the allowable thermal power and the actual thermal power corresponding to each target drive motor.

In some embodiments, in this step, the target controller may determine the allowable thermal power corresponding to the target drive motor in the following way.

Firstly, heat dissipation parameters corresponding to the target drive motor is obtained, in which the heat dissipation parameters corresponding to the target drive motor include a motor heat dissipation power, a motor thermal fusion value, a motor overheat torque reduction threshold, a motor actual temperature value and a motor overheat performance time corresponding to the target drive motor. Secondly, the allowable thermal power corresponding to the target drive motor is calculated by substituting the motor heat dissipation power, the motor thermal fusion value, the motor overheat torque reduction threshold, the motor actual temperature value and the motor overheat performance time corresponding to the target drive motor into a third preset equation. That is, when the target vehicle contains one target drive motor, the allowable thermal power corresponding to the target drive motor is calculated by substituting the motor heat dissipation power, the motor thermal fusion value, the motor overheat torque reduction threshold, the motor actual temperature value and the motor overheat performance time corresponding to the target drive motor into the third preset equation. When the target vehicle contains two target drive motors, three target drive motors, or four target drive motors, the allowable thermal power corresponding to each target drive motor is calculated by substituting the motor heat dissipation power, the motor thermal fusion value, the motor overheat torque reduction threshold, the motor actual temperature value and the motor overheat performance time corresponding to the target drive motor into the third preset equation.

The third preset equation is provided as follows:

$$Pxh = -Pxc + \frac{1000 * Cx * (Kxmax - Kx)}{Tmrx}$$

where, Pxh is the allowable thermal power corresponding to a $x^{th}$ target drive motor, Pxc is the motor heat dissipation power corresponding to the $x^{th}$ target drive motor, Cx is the motor thermal fusion value corresponding to the $x^{th}$ target drive motor, Kxmax is the motor overheat torque reduction threshold corresponding to the $x^{th}$ target drive motor, Kx is the motor actual temperature value corresponding to the $x^{th}$ target drive motor, and Tmrx is the motor overheat performance time corresponding to the $x^{th}$ target drive motor, in which x=1, 2, 3 or 4.

In some embodiments, in this step, the target controller may determine the allowable thermal power corresponding to the target drive motor in the following way.

Firstly, a difference between the target energy recovery power and the allowable energy recovery power corresponding to the target vehicle is calculated. Secondly, the calculated difference is determined as the actual thermal power corresponding to the target drive motor.

At 203b, the target motor controller is requested to control the target drive motor to perform energy recovery according to the allowable thermal power corresponding to the target drive motor, and the target motor controller is requested to control the target drive motor to output the target braking torque.

In embodiments of the disclosure, after the target controller determines the allowable thermal power and the actual thermal power corresponding to the target drive motor, the target controller needs to request the target motor controller to control the target drive motor to perform energy recovery according to the allowable thermal power corresponding to the target drive motor, and request the target motor controller to control the target drive motor to output the target braking torque. The following will describe in detail how the target controller requests the target motor controller to control the target drive motor to perform energy recovery according to the allowable thermal power corresponding to the target drive motor.

(1) When the allowable thermal power corresponding to the target drive motor is greater than or equal to the actual thermal power (that is, when the target vehicle contains one target drive motor, the allowable thermal power corresponding to the target drive motor is greater than or equal to the actual thermal power; and when the target vehicle contains two target drive motors, three target drive motors, or four target drive motors, a sum of allowable thermal powers corresponding to the multiple target drive motors is greater than or equal to the actual thermal power), the specific implementation of the target controller requesting the target motor controller to control the target drive motor to perform energy recovery according to the allowable thermal power corresponding to the target drive motor is as follows.

Firstly, the target energy recovery efficiency corresponding to the target drive motor is calculated by substituting the motor actual torque value, the motor actual rotation speed value and the maximum energy recovery efficiency corresponding to the target drive motor, and the allowable energy recovery power corresponding to the target vehicle into the second preset equation.

In a case that the target vehicle contains one target drive motor, the second preset equation is provided as follows:

$$\eta 1r = 1 - \frac{T1 * n1 * \eta 1 - 9550 * P}{9550 * T1 * n1}$$

where, $\eta 1r$ is the target energy recovery efficiency corresponding to the target drive motor, T1 is the motor actual torque value corresponding to the target drive motor, n1 is the motor actual rotation speed value corresponding to the target drive motor, $\eta 1$ is the maximum energy recovery efficiency corresponding to the target drive motor, and P is the allowable energy recovery power corresponding to the target vehicle.

In a case that the target vehicle contains 2 target drive motors, 3 target drive motors, or 4 target drive motors, the second preset equation is provided as follows:

$$\eta 1r = 1 - \frac{(T1 * n1 * \eta 1 + T2 * n2 * \eta 2 - 9550 * P) * Pct}{9550 * T1 * n1}$$

$$\eta 2r = 1 - \frac{(T1 * n1 * \eta 1 + T2 * n2 * \eta 2 - 9550 * P) * (100\% - Pct)}{19100 * T2 * n2}$$

where, $\eta 1r$ is a target energy recovery efficiency corresponding to any front-axle target drive motor, T1 is a sum of motor actual torque values corresponding to front-axle target drive motors, n1 is an average motor actual rotation speed value corresponding to the front-axle target drive motors, $\eta 1$ is a maximum energy recovery efficiency corresponding to any front-axle target drive motor, $\eta 2r$ is a target energy recovery efficiency corresponding to any rear-axle target drive motor, T2 is a sum of motor actual torque values corresponding to rear-axle target drive motors, n2 is an average motor actual rotation speed value corresponding to the rear-axle target drive motors, $\eta 2$ is a maximum energy recovery efficiency corresponding to any rear-axle target drive motor, P is the allowable energy recovery power corresponding to the target vehicle, and Pct is a front axle motor thermal power distribution coefficient. Pct can be a preset value or a real-time calculated value. If Pct is a preset value, it includes but is not limited to: 40%, 50%, 60%, etc. If Pct is a real-time calculated value, its corresponding calculation equation is provided as follows.

If the allowable thermal power corresponding to the front-axle target drive motor is greater than or equal to the actual thermal power, i.e., Pyh ≥ A - P, Pct=100%. When the target vehicle contains one front-axle target drive motor, Pyh is the allowable thermal power corresponding to the front-axle target drive motor, and when the target vehicle contain 2 front-axle target drive motors, Pyh is a sum of allowable thermal powers corresponding to the two front-axle target drive motors.

If the allowable thermal power corresponding to the front-axle target drive motor is less than the actual thermal

$$Pct = \frac{Pyh}{T1*n1*\eta1 + T2*n2*\eta2 - 9550*P}$$

power, i.e., Pyh<A - P,

Secondly, the target motor controller is requested to control the target drive motor to perform energy recovery according to the target energy recovery efficiency. That is, when the target vehicle contains one target drive motor, the target controller requests the target motor controller corresponding to the target drive motor to control the target drive motor to perform energy recovery according to its corresponding target energy recovery efficiency. When the target vehicle contains two target drive motors, three target drive motors, or four target drive motors, the target controller requests the respective target motor controllers corresponding to each target drive motor to control the respective target drive motor to perform energy recovery according to its corresponding target energy recovery efficiency.

(2) When the allowable thermal power corresponding to the target drive motor is less than the actual thermal power (that is, when the target vehicle contains one target drive motor, the allowable thermal power corresponding to the target drive motor is less than the actual thermal power; and when the target vehicle contains two target drive motors, three target drive motors, or four target drive motors, the sum of allowable thermal powers corresponding to the multiple target drive motors is less than the actual thermal power), the specific implementation of the target controller requesting the target motor controller to control the target drive motor to perform energy recovery according to the allowable thermal power corresponding to the target drive motor is as follows.

Firstly, the target motor controller is requested to control the target drive motor to perform energy recovery according to the allowable thermal power. That is, when the target vehicle contains one target drive motor, the target controller requests the target motor controller corresponding to the target drive motor to control the target drive motor to perform energy recovery according to its corresponding allowable thermal power, so that during the energy recovery process of the target drive motor, its actual thermal power is less than or equal to its allowable thermal power. When the target vehicle contains two target drive motors, three target drive motors, or four target drive motors, the target controller requests the respective target motor controller corresponding to each target drive motor to control the respective target drive motor to perform energy recovery according to its corresponding allowable thermal power, so that during the energy recovery process of each target drive motor, the actual thermal power of each target drive motor is less than or equal to its corresponding allowable thermal power.

Secondly, the target rotation speed value corresponding to the generator is calculated. The generator is specifically the generator in a range extender of the target vehicle. The preconfigured transmission ratio value and the preconfigured engine reverse-drive torque curve are first obtained. The preconfigured transmission ratio is a transmission ratio between the motor and the generator in the range extender of the target vehicle. The target rotation speed value corresponding to the generator is calculated by substituting the motor actual torque value, the motor actual rotation speed value and the target energy recovery efficiency corresponding to the target drive motor, the allowable energy recovery power corresponding to the target vehicle, the preconfigured transmission ratio value and the preconfigured engine reverse-drive torque curve into the fourth preset equation. That is, when the target vehicle contains one target drive motor, the target rotation speed value corresponding to the generator is calculated by substituting the motor actual torque value, the motor actual rotation speed value and the target energy recovery efficiency corresponding to the target drive motor, the allowable energy recovery power corresponding to the target vehicle, the preconfigured transmission ratio value and the preconfigured engine reverse-drive torque curve into the fourth preset equation. When the target vehicle contains two target drive motors, three target drive motors, or four target drive motors, the target rotation speed value corresponding to the generator is calculated by substituting the motor actual torque value, the motor actual rotation speed value and the target energy recovery efficiency corresponding to each target drive motor, the allowable energy recovery power corresponding to the target vehicle, the preconfigured transmission ratio value and the preconfigured engine reverse-drive torque curve into the fourth preset equation.

In a case that the target vehicle contains one target drive motor, the fourth preset equation is provided as follows:

$$ng = \frac{9550 * (T1 * n1 * \eta1r - P)}{i * f(ne)}$$

where, ng is the target rotation speed value corresponding to the generator, T1 is a motor actual torque value corresponding to the target drive motor, n1 is the motor actual rotation speed value corresponding to the target drive motor, η1r is the target energy recovery efficiency corresponding to the target drive motor, P is the allowable energy recovery power corresponding to the target vehicle, i is the preconfigured transmission ratio value, and f (ne) is the preconfigured engine reverse-drive torque curve.

In a case that the target vehicle contains 2 target drive motors, 3 target drive motors, or 4 target drive motors, the fourth preset equation is provided as follows:

$$ng = \frac{9550 * （T1 * n1 * η1r + T2 * n2 * η2r − P）}{i * f （ne）}$$

where, ng is the target rotation speed value corresponding to the generator, T1 is a sum of motor actual torque values corresponding to front-axle target drive motors, n1 is an average motor actual rotation speed value corresponding to the front-axle target drive motors, η1r is a target energy recovery efficiency corresponding to any front-axle target drive motor, T2 is a sum of motor actual torque values corresponding to rear-axle target drive motors, n2 is an average motor actual rotation speed value corresponding to the rear-axle target drive motors, η2r is a target energy recovery efficiency corresponding to any rear-axle target drive motor, P is the allowable energy recovery power corresponding to the target vehicle, i is the preconfigured transmission ratio value, and f (ne) is the preconfigured engine reverse-drive torque curve.

Secondly, a fuel cut-off request is sent to an engine controller, so that the engine controller controls the engine to cut off fuel. The engine is specifically an engine in the range extender of the target vehicle.

Finally, a rotation speed request carrying the target rotation speed value is sent to the generator controller, so that the generator controller controls the generator to operate at the target rotation speed value.

In order to achieve the above object, embodiments of the disclosure also provide a storage medium having programs stored thereon. When the programs are executed, a device where the storage medium is located is controlled to implement the above-mentioned energy recovery control method.

In order to achieve the above object, embodiments of the disclosure also provide an energy recovery control device, which includes a storage medium and one or more processors. The storage medium is coupled with the processor. The processor is configured to execute program instructions stored in the storage medium, and when the program instructions are executed, the above energy recovery control method is implemented.

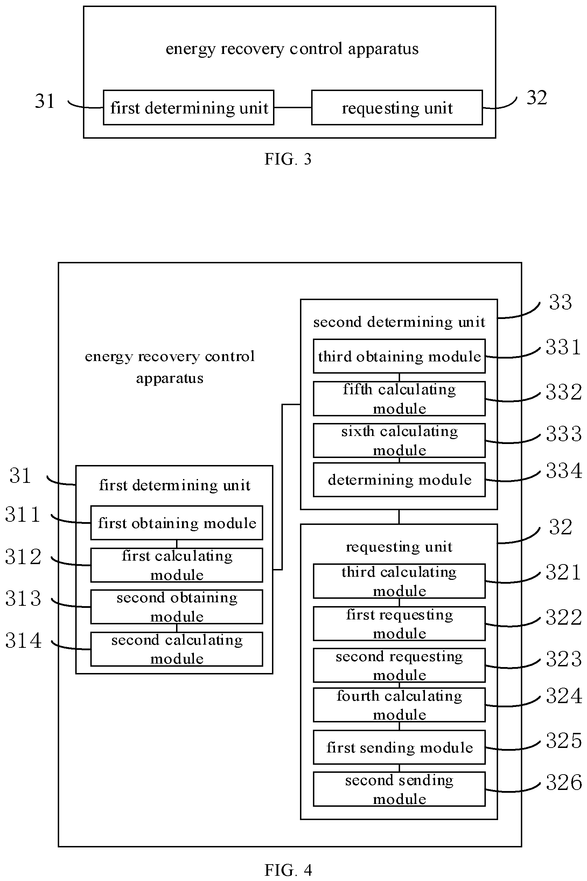

In some embodiments, as an implementation of the methods shown in FIG. 1 and FIG. 2, another embodiment of the disclosure also provides an energy recovery control apparatus. The apparatus embodiment corresponds to the foregoing method embodiment. For the convenience of reading, the details in the foregoing method embodiment will not be repeated in the apparatus embodiment. However, it should be clear that the apparatus in the embodiment of the disclosure can correspondingly implement the foregoing contents in the method embodiment. This apparatus is used to provide the VLC module with the braking torque that satisfies the requirements under any circumstances through the drive motor. As illustrated in FIG. 3, the apparatus includes:

a first determining unit 31, configured to determine an allowable energy recovery power and a target energy recovery power corresponding to a target vehicle, in response to receiving a braking request from a vehicle, in which the braking request includes a target braking torque; and

a requesting unit 32, configured to, in response to determining that the allowable energy recovery power is less than the target energy recovery power, request a target motor controller to control a target drive motor to perform energy recovery according to an allowable thermal power corresponding to the target drive motor, and request the target motor controller to control the target drive motor to output the target braking torque, in which a sum of the allowable thermal power and the allowable energy recovery power is greater than or equal to the target energy recovery power.

In some embodiments, as illustrated in FIG. 4, the first determining unit 31 includes:

a first obtaining module 311, configured to obtain a power cell allowable charging power and a load power consumption corresponding to the target vehicle; and

a first calculating module 312, configured to calculate the allowable energy recovery power corresponding to the target vehicle according to the power cell allowable charging power and the load power consumption.

In some embodiments, as illustrated in FIG. 4, the first determining unit 31 includes:

a second obtaining module 313, configured to obtain drive motor parameters corresponding to the target drive motor, in which the drive motor parameters include a motor actual torque value, a motor actual rotation speed value and a maximum energy recovery efficiency corresponding to the target drive motor; and

a second calculating module 314, configured to calculate the target energy recovery power corresponding to the target vehicle by substituting the motor actual torque value, the motor actual rotation speed value and the maximum energy recovery efficiency corresponding to the target drive motor into a first preset equation.

In some embodiments, as illustrated in FIG. 4, the apparatus further includes:
a second determining unit 33, configured to determine the allowable thermal power and an actual thermal power corresponding to the target drive motor before the requesting unit 32 requests the target motor controller to control the target drive motor to perform energy recovery according to the allowable thermal power corresponding to the target drive motor.
In some embodiments, as illustrated in FIG. 4, the requesting unit 32 includes:

a third calculating module 321, configured to, in a case that the allowable thermal power is greater than or equal to the actual thermal power, calculate a target energy recovery efficiency corresponding to the target drive motor by substituting the motor actual torque value, the motor actual rotation speed value and the maximum energy recovery efficiency corresponding to the target drive motor, and the allowable energy recovery power into a second preset equation; and
a first requesting module 322, configured to request the target motor controller to control the target drive motor to perform energy recovery according to the target energy recovery efficiency.

In a case that the target vehicle contains one target drive motor, the second preset equation is provided as follows:

$$\eta 1r = 1 - \frac{T1 * n1 * \eta 1 - 9550 * P}{9550 * T1 * n1}$$

where, $\eta 1r$ is the target energy recovery efficiency corresponding to the target drive motor, T1 is the motor actual torque value corresponding to the target drive motor, n1 is the motor actual rotation speed value corresponding to the target drive motor, $\eta 1$ is the maximum energy recovery efficiency corresponding to the target drive motor, and P is the allowable energy recovery power corresponding to the target vehicle;
in a case that the target vehicle contains 2 target drive motors, 3 target drive motors, or 4 target drive motors, the second preset equation is provided as follows:

$$\eta 1r = 1 - \frac{(T1 * n1 * \eta 1 + T2 * n2 * \eta 2 - 9550 * P) * Pct}{9550 * T1 * n1}$$

$$\eta 2r = 1 - \frac{(T1 * n1 * \eta 1 + T2 * n2 * \eta 2 - 9550 * P) * (100\% - Pct)}{19100 * T2 * n2}$$

where, $\eta 1r$ is a target energy recovery efficiency corresponding to any front-axle target drive motor, T1 is a sum of motor actual torque values corresponding to front-axle target drive motors, n1 is an average motor actual rotation speed value corresponding to the front-axle target drive motors, $\eta 1$ is a maximum energy recovery efficiency corresponding to any front-axle target drive motor, $\eta 2r$ is a target energy recovery efficiency corresponding to any rear-axle target drive motor, T2 is a sum of motor actual torque values corresponding to rear-axle target drive motors, n2 is an average motor actual rotation speed value corresponding to the rear-axle target drive motors, $\eta 2$ is a maximum energy recovery efficiency corresponding to any rear-axle target drive motor, P is the allowable energy recovery power corresponding to the target vehicle, and Pct is a front-axle motor thermal power distribution coefficient.

In some embodiments, as illustrated in FIG. 4, the requesting unit 32 includes:

a second requesting module 323, configured to, in a case that the allowable thermal power is less than the actual thermal power, request the target motor controller to control the target drive motor to perform energy recovery according to the allowable thermal power;
a fourth calculating module 324, configured to calculate a target rotation speed value corresponding to a generator;
a first sending module 325, configured to send a fuel cut-off request to an engine controller, so that the engine controller controls an engine to cut off fuel; and
a second sending module 326, configured to send a rotation speed request carrying the target rotation speed value to a generator controller, so that the generator controller controls the generator to operate at the target rotation speed value.

In some embodiments, as illustrated in FIG. 4, the second determining unit 33 includes:

> a third obtaining module 331, configured to obtain heat dissipation parameters corresponding to the target drive motor, in which the heat dissipation parameters include a motor heat dissipation power, a motor thermal fusion value, a motor overheat torque reduction threshold, a motor actual temperature value and a motor overheat performance time corresponding to the target drive motor; and
> a fifth calculating module 332, configured to calculate the allowable thermal power corresponding to the target drive motor by substituting the motor heat dissipation power, the motor thermal fusion value, the motor overheat torque reduction threshold, the motor actual temperature value and the motor overheat performance time corresponding to the target drive motor into a third preset equation.

The third preset equation is provided as follows:

$$\mathrm{Pxh} = -\mathrm{Pxc} + \frac{1000 * \mathrm{Cx} * (\mathrm{Kxmax} - \mathrm{Kx})}{\mathrm{Tmrx}}$$

where, Pxh is an allowable thermal power corresponding to a $x^{th}$ target drive motor, Pxc is a motor heat dissipation power corresponding to the $x^{th}$ target drive motor, Cx is a motor thermal fusion value corresponding to the $x^{th}$ target drive motor, Kxmax is a motor overheat torque reduction threshold corresponding to the $x^{th}$ target drive motor, Kx is a motor actual temperature value corresponding to the $x^{th}$ target drive motor, and Tmrx is a motor overheat performance time corresponding to the $x^{th}$ target drive motor, in which x=1, 2, 3 or 4.

In some embodiments, as illustrated in FIG. 4, the second determining unit 33 includes:

> a sixth calculating module 333, configured to calculate a difference between the target energy recovery power and the allowable energy recovery power; and
> a determining module 334, configured to determine the difference as the actual thermal power corresponding to the target drive motor.

In some embodiments, as illustrated in FIG. 4, the fourth calculating module 324 is configured to: obtain a preconfigured transmission ratio value and a preconfigured engine reverse-drive torque curve; and calculate the target rotation speed value by substituting the motor actual torque value, the motor actual rotation speed value, the target energy recovery efficiency, the allowable energy recovery power, the preconfigured transmission ratio value and the preconfigured engine reverse-drive torque curve into a fourth preset equation.

In a case that the target vehicle contains one target drive motor, the fourth preset equation is provided as follows:

$$\mathrm{ng} = \frac{9550 * (\mathrm{T1} * \mathrm{n1} * \eta 1\mathrm{r} - \mathrm{P})}{\mathrm{i} * \mathrm{f}(\mathrm{ne})}$$

where, ng is the target rotation speed value corresponding to the motor, T1 is the motor actual torque value corresponding to the target drive motor, n1 is the motor actual rotation speed value corresponding to the target drive motor, η1r is the target energy recovery efficiency corresponding to the target drive motor, P is the allowable energy recovery power corresponding to the target vehicle, i is the preconfigured transmission ratio value, and f (ne) is the preconfigured engine reverse-drive torque curve;

in a case that the target vehicle contains 2 target drive motors, 3 target drive motors, or 4 target drive motors, the fourth preset equation is provided as follows:

$$\mathrm{ng} = \frac{9550 * (\mathrm{T1} * \mathrm{n1} * \eta 1\mathrm{r} + \mathrm{T2} * \mathrm{n2} * \eta 2\mathrm{r} - \mathrm{P})}{\mathrm{i} * \mathrm{f}(\mathrm{ne})}$$

where, ng is the target rotation speed value corresponding to the motor, T1 is a sum of motor actual torque values corresponding to front-axle target drive motors, n1 is an average motor actual rotation speed value corresponding to the front-axle target drive motors, η1r is a target energy recovery efficiency corresponding to any front-axle target drive motor, T2 is a sum of motor actual torque values corresponding to rear-axle target drive motors, n2 is an average motor actual rotation speed value corresponding to the rear-axle target drive motors, η2r is a target energy recovery efficiency corresponding to any rear-axle target drive motor, P is the allowable energy recovery power corresponding to the target vehicle, i is the preconfigured transmission ratio value, and f (ne) is the preconfigured engine reverse-drive torque curve..

The disclosure provides an energy recovery control method and apparatus. In embodiments of the disclosure, after receiving the braking request sent by the VLC module, the target controller determines the allowable energy recovery power and the target energy recovery power corresponding to the target vehicle. When the allowable energy recovery power corresponding to the target vehicle is greater than or equal to the target energy recovery power, i.e., there is no limitation on the energy recovery power, the target controller can request the target motor controller to control the target drive motor to perform energy recovery according to its corresponding maximum energy recovery efficiency, and request the target motor controller to control the target drive motor to output the target braking torque. When the allowable energy recovery power corresponding to the target vehicle is less than the target energy recovery power, i.e., there are limitations on the energy recovery power, the target controller needs to request the target motor controller to control the target drive motor to perform energy recovery according to the allowable thermal power corresponding to the target drive motor, and also requests the target motor controller to control the target drive motor to output the target braking torque. When the target controller requests the target motor controller to control the target drive motor to perform energy recovery according to the allowable thermal power corresponding to the target drive motor, the target drive motor will convert part of the energy to be recovered into electrical energy for charging the power cell and convert the other part into thermal energy for release. Therefore, when the allowable energy recovery power corresponding to the target vehicle is less than the target energy recovery power, the braking torque that satisfies the requirements can still be provided to the VLC module through the target drive motor.

The energy recovery control device includes a processor and a memory. The above-mentioned first determining unit, the first requesting unit and the second requesting unit are all stored in the memory as program units, and the processor implements corresponding functions by executing the above-mentioned program units stored in the memory.

The processor contains a core used to call the corresponding program unit from the memory. There may be one or more cores set in the processor. By adjusting the core parameter, the target controller can provide the braking torque that satisfies the requirements to the VLC module through the drive motor.

The embodiment of the disclosure provides a storage medium having programs stored thereon. When the programs are executed, a device where the storage medium is located is controlled to implement the above energy recovery control method.

The storage medium may include a non-permanent memory in a computer-readable medium, a random access memory (RAM) and/or non-volatile memory, such as read-only memory (ROM) or flash RAM. The memory includes at least one memory chip.

The embodiment of the disclosure also provides an energy recovery control device, which includes a storage medium and one or more processors. The storage medium is coupled with the processor. The processor is configured to execute program instructions stored in the storage medium, and when the program instructions are executed, the above energy recovery control method is implemented.

Embodiments of the disclosure provide a device. The device includes a processor, a memory, and a program stored on the memory and executable by the processor. When the processor executes the program, it implements the following steps:

in response to receiving a braking request from a vehicle, determining an allowable energy recovery power and a target energy recovery power corresponding to a target vehicle, in which the braking request includes a target braking torque; and
in response to determining that the allowable energy recovery power is less than the target energy recovery power, requesting a target motor controller to control a target drive motor to perform energy recovery according to an allowable thermal power corresponding to the target drive motor, and requesting the target motor controller to control the target drive motor to output the target braking torque, in which a sum of the allowable thermal power and the allowable energy recovery power is greater than or equal to the target energy recovery power.

In some embodiments, determining the allowable energy recovery power corresponding to the target vehicle, includes:

obtaining a power cell allowable charging power and a load power consumption corresponding to the target vehicle; and
calculating the allowable energy recovery power corresponding to the target vehicle according to the power cell allowable charging power and the load power consumption.

In some embodiments, determining the target energy recovery power corresponding to the target vehicle, includes:

obtaining drive motor parameters corresponding to the target drive motor, in which the drive motor parameters include a motor actual torque value, a motor actual rotation speed value and a maximum energy recovery efficiency corresponding to the target drive motor; and
calculating the target energy recovery power corresponding to the target vehicle by substituting the motor actual torque value, the motor actual rotation speed value and the maximum energy recovery efficiency corresponding to the target drive motor into a first preset equation.

In some embodiments, before requesting the target motor controller to control the target drive motor to perform energy recovery according to the allowable thermal power corresponding to the target drive motor, the method further includes:
determining the allowable thermal power and an actual thermal power corresponding to the target drive motor.
In some embodiments, in a case that the allowable thermal power is greater than or equal to the actual thermal power, requesting the target motor controller to control the target drive motor to perform energy recovery according to the allowable thermal power corresponding to the target drive motor, includes:

calculating a target energy recovery efficiency corresponding to the target drive motor by substituting the motor actual torque value, the motor actual rotation speed value, the maximum energy recovery efficiency corresponding to the target drive motor and the allowable energy recovery power into a second preset equation; and
requesting the target motor controller to control the target drive motor to perform energy recovery according to the target energy recovery efficiency.

In a case that the target vehicle contains one target drive motor, the second preset equation is provided as follows:

$$\eta 1r = 1 - \frac{T1 * n1 * \eta 1 - 9550 * P}{9550 * T1 * n1}$$

where, $\eta 1r$ is the target energy recovery efficiency corresponding to the target drive motor, T1 is the motor actual torque value corresponding to the target drive motor, n1 is the motor actual rotation speed value corresponding to the target drive motor, $\eta 1$ is the maximum energy recovery efficiency corresponding to the target drive motor, and P is the allowable energy recovery power corresponding to the target vehicle;
in a case that the target vehicle contains 2 target drive motors, 3 target drive motors, or 4 target drive motors, the second preset equation is provided as follows:

$$\eta 1r = 1 - \frac{(T1 * n1 * \eta 1 + T2 * n2 * \eta 2 - 9550 * P) * Pct}{9550 * T1 * n1}$$

$$\eta 2r = 1 - \frac{(T1 * n1 * \eta 1 + T2 * n2 * \eta 2 - 9550 * P) * (100\% - Pct)}{19100 * T2 * n2}$$

where, $\eta 1r$ is a target energy recovery efficiency corresponding to any front-axle target drive motor, T1 is a sum of motor actual torque values corresponding to front-axle target drive motors, n1 is an average motor actual rotation speed value corresponding to the front-axle target drive motors, $\eta 1$ is a maximum energy recovery efficiency corresponding to any front-axle target drive motor, $\eta 2r$ is a target energy recovery efficiency corresponding to any rear-axle target drive motor, T2 is a sum of motor actual torque values corresponding to rear-axle target drive motors, n2 is an average motor actual rotation speed value corresponding to the rear-axle target drive motors, $\eta 2$ is a maximum energy recovery efficiency corresponding to any rear-axle target drive motor, P is the allowable energy recovery power corresponding to the target vehicle, and Pct is a front-axle motor thermal power distribution coefficient.

In some embodiments, in a case that the allowable thermal power is less than the actual thermal power, requesting the target motor controller to control the target drive motor to perform energy recovery according to the allowable thermal power corresponding to the target drive motor, includes:

requesting the target motor controller to control the target drive motor to perform energy recovery according to the allowable thermal power;
calculating a target rotation speed value corresponding to a generator;
sending a fuel cut-off request to an engine controller, so that the engine controller controls an engine to cut off fuel; and
sending a rotation speed request carrying the target rotation speed value to a generator controller, so that the generator controller controls the generator to operate at the target rotation speed value.

In some embodiments, determining the allowable thermal power corresponding to the target drive motor, includes:

obtaining heat dissipation parameters corresponding to the target drive motor, in which the heat dissipation parameters include a motor heat dissipation power, a motor thermal fusion value, a motor overheat torque reduction threshold, a motor actual temperature value and a motor overheat performance time corresponding to the target drive motor; and
calculating the allowable thermal power corresponding to the target drive motor by substituting the motor heat dissipation power, the motor thermal fusion value, the motor overheat torque reduction threshold, the motor actual temperature value and the motor overheat performance time corresponding to the target drive motor into a third preset equation.

The third preset equation is provided as follows:

$$Pxh = -Pxc + \frac{1000 * Cx * (Kxmax - Kx)}{Tmrx}$$

where, Pxh is an allowable thermal power corresponding to a $x^{th}$ target drive motor, Pxc is a motor heat dissipation power corresponding to the $x^{th}$ target drive motor, Cx is a motor thermal fusion value corresponding to the $x^{th}$ target drive motor, Kxmax is a motor overheat torque reduction threshold corresponding to the $x^{th}$ target drive motor, Kx is a motor actual temperature value corresponding to the $x^{th}$ target drive motor, and Tmrx is a motor overheat performance time corresponding to the $x^{th}$ target drive motor, in which x=1, 2, 3 or 4.

In some embodiments, determining the actual thermal power corresponding to the target drive motor, includes:

calculating a difference between the target energy recovery power and the allowable energy recovery power; and
determining the difference as the actual thermal power corresponding to the target drive motor.

In some embodiments, calculating the target rotation speed value corresponding to the motor, includes:

obtaining a preconfigured transmission ratio value and a preconfigured engine reverse-drive torque curve; and
calculating the target rotation speed value by substituting the motor actual torque value, the motor actual rotation speed value, the target energy recovery efficiency, the allowable energy recovery power, the preconfigured transmission ratio value and the preconfigured engine reverse-drive torque curve into a fourth preset equation.

In a case that the target vehicle contains one target drive motor, the fourth preset equation is provided as follows:

$$ng = \frac{9550 * （T1 * n1 * \eta1r - P）}{i * f （ne）}$$

where, ng is the target rotation speed value corresponding to the motor, T1 is the motor actual torque value corresponding to the target drive motor, n1 is the motor actual rotation speed value corresponding to the target drive motor, $\eta1r$ is the target energy recovery efficiency corresponding to the target drive motor, P is the allowable energy recovery power corresponding to the target vehicle, i is the preconfigured transmission ratio value, and f (ne) is the preconfigured engine reverse-drive torque curve;
in a case that the target vehicle contains 2 target drive motors, 3 target drive motors, or 4 target drive motors, the fourth preset equation is provided as follows:

$$ng = \frac{9550 * （T1 * n1 * \eta1r + T2 * n2 * \eta2r - P）}{i * f （ne）}$$

where, ng is the target rotation speed value corresponding to the motor, T1 is a sum of motor actual torque values corresponding to front-axle target drive motors, n1 is an average motor actual rotation speed value corresponding to the front-axle target drive motors, $\eta$1r is a target energy recovery efficiency corresponding to any front-axle target drive motor, T2 is a sum of motor actual torque values corresponding to rear-axle target drive motors, n2 is an average motor actual rotation speed value corresponding to the rear-axle target drive motors, $\eta$2r is a target energy recovery efficiency corresponding to any rear-axle target drive motor, P is the allowable energy recovery power corresponding to the target vehicle, i is the preconfigured transmission ratio value, and f (ne) is the preconfigured engine reverse-drive torque curve.

In order to achieve the above object, embodiments of the disclosure also provide a computer program product. The computer program product includes a computer program. When the computer program is executed by a processor, the energy recovery control method described in any of the above embodiments is implemented.

In order to achieve the above object, the embodiment of the disclosure also provides a computer program including computer program codes. When the computer program codes are executed by a computer, the computer is caused to implement the energy recovery control method described in any of the above embodiments.

The disclosure also provides a computer program product. When it is executed on a data processing device, it is adapted to execute program codes initialized with the following method steps: in response to receiving a braking request from a vehicle, determining an allowable energy recovery power and a target energy recovery power corresponding to a target vehicle, in which the braking request includes a target braking torque; and in response to determining that the allowable energy recovery power is less than the target energy recovery power, requesting a target motor controller to control a target drive motor to perform energy recovery according to an allowable thermal power corresponding to the target drive motor, and requesting the target motor controller to control the target drive motor to output the target braking torque, in which a sum of the allowable thermal power and the allowable energy recovery power is greater than or equal to the target energy recovery power.

Those skilled in the art will appreciate that embodiments of the disclosure may be provided as methods, systems, or computer program products. Therefore, embodiments of the disclosure may be implemented as entirely hardware embodiments, entirely software embodiments, or a combination of software embodiments and hardware embodiments. Moreover, the disclosure may take the form of a computer program product implemented on one or more computer-usable storage medium (including, but not limited to, disk memory, CD-ROM, optical memory, etc.) having computer-usable program codes embodied therein.

The disclosure is described with reference to flowcharts and/or block diagrams of methods, apparatus (systems), and computer program products according to embodiments of the disclosure. It is understood that the computer program instructions are used to implement each process and/or block in the flowcharts and/or block diagrams, and combinations of processes and/or blocks in the flowcharts and/or block diagrams. These computer program instructions may be provided to a processor of a general purpose computer, a dedicated computer, an embedded processor or other programmable data processing devices to produce a machine, such that the computer or a processor of other programmable data processing devices can be used as a device to execute the instruction to implement the functions in one or more processes of the flowchart and/or one or more blocks of the block diagram.

These computer program instructions may also be stored in a computer-readable memory capable of directing a computer or other programmable data processing devices to operate in a particular manner, such that the instructions stored in that computer-readable memory produce an article of manufacture including an instructing device, the instruction device implements the functions specified in one or more processes of the flowchart and/or one or more blocks of the block diagram.

These computer program instructions may also be loaded onto a computer or other programmable data processing devices, to cause the computer or other programmable data processing devices to perform a series of operation steps to produce computer-implemented processing, such that the computer or other programmable data processing devices can execute the instruction to implement the functions in one or more processes of the flowchart and/or one or more blocks of the block diagram.

In a typical configuration, a computing device includes one or more central processing units (CPUs), input/output interfaces, network interfaces and memories.

The memory may include a non-permanent memory in the computer-readable medium, a RAM and/or non-volatile memory, such as a ROM or flash RAM. The memory is an example of a computer-readable medium.

The computer-readable medium includes both permanent and non-permanent, removable and non-removable media that can be used for storage of information by using any method or technology. The information may be computer-readable instructions, data structures, program modules or other data. Examples of the computer storage medium include, but are not limited to, a phase change memory (PRAM), a static RAM (SRAM), a dynamic RAM (DRAM), other types of RAM, a ROM, an electrically erasable programmable ROM (EEPROM), a flash memory or other memory technologies, compact disc ROM (CD-ROM), digital versatile disc (DVD) or other optical memories, magnetic tape cassettes, magnetic disk memories or other magnetic storage devices or any other non-transitory medium, which can be used to store information that can be accessed by a computing device. As defined in this article, the computer-readable medium does not include a transitory media, such as modulated data signal and carrier.

It should also be noted that the terms "comprises" "contains" or any other variation thereof are intended to cover a non-exclusive inclusion, such that a process, method, article or apparatus that includes a list of elements includes not only those elements, but also other elements that are not expressly listed or inherent elements exclusive to the process, method, article or apparatus. Without further limitation, an element defined by the statement "comprises a..." does not exclude the presence of additional identical elements in the process, method, article or apparatus that includes the elements.

Those skilled in the art will appreciate that embodiments of the disclosure may be provided as methods, systems, or computer program products. Therefore, embodiments of the disclosure may be implemented as entirely hardware embodiments, entirely software embodiments, or a combination of software embodiments and hardware embodiments. Moreover, the disclosure may take the form of a computer program product implemented on one or more computer-usable storage medium (including, but not limited to, disk memory, CD-ROM, optical memory, etc.) having computer-usable program codes embodied therein.

The above are only embodiments of the disclosure and are not intended to limit the disclosure. Various modifications and variations may occur in the disclosure to those skilled in the art. Any modifications, equivalent substitutions, improvements, etc. made within the spirit and principles of this disclosure shall be included in the scope of the claims of this disclosure.

All embodiments of the disclosure can be executed alone or in combination with other embodiments, which are considered to be within the scope of protection claimed by the disclosure.

**Claims**

1. An energy recovery control method, comprising:

   in response to receiving a braking request from a vehicle, determining an allowable energy recovery power and a target energy recovery power corresponding to a target vehicle, wherein the braking request comprises a target braking torque; and
   in response to determining that the allowable energy recovery power is less than the target energy recovery power, requesting a target motor controller to control a target drive motor to perform energy recovery according to an allowable thermal power corresponding to the target drive motor, and requesting the target motor controller to control the target drive motor to output the target braking torque, wherein a sum of the allowable thermal power and the allowable energy recovery power is greater than or equal to the target energy recovery power.

2. The method of claim 1, wherein determining the allowable energy recovery power corresponding to the target vehicle, comprises:

   obtaining a power cell allowable charging power and a load power consumption corresponding to the target vehicle; and
   calculating the allowable energy recovery power corresponding to the target vehicle according to the power cell allowable charging power and the load power consumption.

3. The method of claim 1 or 2, wherein determining the target energy recovery power corresponding to the target vehicle, comprises:

   obtaining drive motor parameters corresponding to the target drive motor, wherein the drive motor parameters comprise a motor actual torque value, a motor actual rotation speed value and a maximum energy recovery efficiency corresponding to the target drive motor; and
   calculating the target energy recovery power corresponding to the target vehicle by substituting the motor actual torque value, the motor actual rotation speed value and the maximum energy recovery efficiency corresponding to the target drive motor into a first preset equation.

4. The method of any one of claims 1-3, before requesting the target motor controller to control the target drive motor to perform energy recovery according to the allowable thermal power corresponding to the target drive motor, further comprising:
   determining the allowable thermal power and an actual thermal power corresponding to the target drive motor.

**5.** The method of claim 4, wherein in a case that the allowable thermal power is greater than or equal to the actual thermal power, requesting the target motor controller to control the target drive motor to perform energy recovery according to the allowable thermal power corresponding to the target drive motor, comprises:

calculating a target energy recovery efficiency corresponding to the target drive motor by substituting the motor actual torque value, the motor actual rotation speed value, the maximum energy recovery efficiency corresponding to the target drive motor and the allowable energy recovery power into a second preset equation; and requesting the target motor controller to control the target drive motor to perform energy recovery according to the target energy recovery efficiency.

**6.** The method of claim 5, wherein in a case that the target vehicle contains a target drive motor, the second preset equation is provided as follows:

$$\eta 1r = 1 - \frac{T1 * n1 * \eta 1 - 9550 * P}{9550 * T1 * n1}$$

where, $\eta 1r$ is the target energy recovery efficiency corresponding to the target drive motor, T1 is the motor actual torque value corresponding to the target drive motor, n1 is the motor actual rotation speed value corresponding to the target drive motor, $\eta 1$ is the maximum energy recovery efficiency corresponding to the target drive motor, and P is the allowable energy recovery power corresponding to the target vehicle;
wherein in a case that the target vehicle contains two target drive motors, three target drive motors, or four target drive motors, the second preset equation is provided as follows:

$$\eta 1r = 1 - \frac{(T1 * n1 * \eta 1 + T2 * n2 * \eta 2 - 9550 * P) * Pct}{9550 * T1 * n1}$$

$$\eta 2r = 1 - \frac{(T1 * n1 * \eta 1 + T2 * n2 * \eta 2 - 9550 * P) * (100\% - Pct)}{19100 * T2 * n2}$$

where, $\eta 1r$ is a target energy recovery efficiency corresponding to any front-axle target drive motor, T1 is a sum of motor actual torque values corresponding to front-axle target drive motors, n1 is an average motor actual rotation speed value corresponding to the front-axle target drive motors, $\eta 1$ is a maximum energy recovery efficiency corresponding to any front-axle target drive motor, $\eta 2r$ is a target energy recovery efficiency corresponding to any rear-axle target drive motor, T2 is a sum of motor actual torque values corresponding to rear-axle target drive motors, n2 is an average motor actual rotation speed value corresponding to the rear-axle target drive motors, $\eta 2$ is a maximum energy recovery efficiency corresponding to any rear-axle target drive motor, P is the allowable energy recovery power corresponding to the target vehicle, and Pct is a front-axle motor thermal power distribution coefficient.

**7.** The method of claim 4, wherein in a case that the allowable thermal power is less than the actual thermal power, requesting the target motor controller to control the target drive motor to perform energy recovery according to the allowable thermal power corresponding to the target drive motor, comprises:

requesting the target motor controller to control the target drive motor to perform energy recovery according to the allowable thermal power;
calculating a target rotation speed value corresponding to a generator;
sending a fuel cut-off request to an engine controller, so that the engine controller controls the engine to cut off fuel; and
sending a rotation speed request carrying the target rotation speed value to a generator controller, so that the generator controller controls the generator to operate at the target rotation speed value.

**8.** The method of any one of claims 1-4, wherein determining the allowable thermal power corresponding to the target drive motor, comprises:

obtaining heat dissipation parameters corresponding to the target drive motor, wherein the heat dissipation parameters comprise a motor heat dissipation power, a motor thermal fusion value, a motor overheat torque reduction threshold, a motor actual temperature value and a motor overheat performance time corresponding to the target drive motor; and

calculating the allowable thermal power corresponding to the target drive motor by substituting the motor heat dissipation power, the motor thermal fusion value, the motor overheat torque reduction threshold, the motor actual temperature value and the motor overheat performance time corresponding to the target drive motor into a third preset equation.

9. The method of claim 8, wherein the third preset equation is provided as follows:

$$Pxh = -Pxc + \frac{1000 * Cx * (Kxmax - Kx)}{Tmrx}$$

where, Pxh is an allowable thermal power corresponding to a $x^{th}$ target drive motor, Pxc is a motor heat dissipation power corresponding to the $x^{th}$ target drive motor, Cx is a motor thermal fusion value corresponding to the $x^{th}$ target drive motor, Kxmax is a motor overheat torque reduction threshold corresponding to the $x^{th}$ target drive motor, Kx is a motor actual temperature value corresponding to the $x^{th}$ target drive motor, and Tmrx is a motor overheat performance time corresponding to the $x^{th}$ target drive motor, wherein x=1, 2, 3 or 4.

10. The method of claim 4, wherein determining the actual thermal power corresponding to the target drive motor, comprises:

calculating a difference between the target energy recovery power and the allowable energy recovery power; and
determining the difference as the actual thermal power corresponding to the target drive motor.

11. The method of claim 7, wherein calculating the target rotation speed value corresponding to the generator, comprises:

obtaining a preconfigured transmission ratio value and a preconfigured engine reverse-drive torque curve; and
calculating the target rotation speed value by substituting the motor actual torque value, the motor actual rotation speed value, the target energy recovery efficiency, the allowable energy recovery power, the preconfigured transmission ratio value and the preconfigured engine reverse-drive torque curve into a fourth preset equation.

12. The method of claim 11, wherein in a case that the target vehicle contains one target drive motor, the fourth preset equation is provided as follows:

$$ng = \frac{9550 * (T1 * n1 * \eta1r - P)}{i * f(ne)}$$

where, ng is the target rotation speed value corresponding to the generator, T1 is the motor actual torque value corresponding to the target drive motor, n1 is the motor actual rotation speed value corresponding to the target drive motor, $\eta1r$ is the target energy recovery efficiency corresponding to the target drive motor, P is the allowable energy recovery power corresponding to the target vehicle, i is the preconfigured transmission ratio value, and f (ne) is the preconfigured engine reverse-drive torque curve;

wherein in a case that the target vehicle contains 2 target drive motors, 3 target drive motors, or 4 target drive motors, the fourth preset equation is provided as follows:

$$ng = \frac{9550 * (T1 * n1 * \eta1r + T2 * n2 * \eta2r - P)}{i * f(ne)}$$

where, ng is the target rotation speed value corresponding to the motor, T1 is a sum of motor actual torque values corresponding to front-axle target drive motors, n1 is an average motor actual rotation speed value corresponding to the front-axle target drive motors, $\eta1r$ is a target energy recovery efficiency corresponding to any front-axle target drive motor, T2 is a sum of motor actual torque values corresponding to rear-axle target drive motors, n2 is an average motor actual rotation speed value corresponding to the rear-axle target drive motors, $\eta2r$ is a target energy recovery efficiency corresponding to any rear-axle target drive motor, P is the allowable energy recovery power corresponding to the target vehicle, i is the preconfigured transmission ratio value, and f (ne) is the preconfigured engine reverse-drive torque curve.

13. An energy recovery control apparatus, comprising:

a first determining unit, configured to, determine an allowable energy recovery power and a target energy recovery power corresponding to a target vehicle in response to receiving a braking request from a vehicle, wherein the braking request comprises a target braking torque; and
a requesting unit, configured to, in response to determining that the allowable energy recovery power is less than the target energy recovery power, request a target motor controller to control a target drive motor to perform energy recovery according to an allowable thermal power corresponding to the target drive motor, and request the target motor controller to control the target drive motor to output the target braking torque, wherein a sum of the allowable thermal power and the allowable energy recovery power is greater than or equal to the target energy recovery power.

14. The apparatus of claim 13, wherein the first determining unit comprises:

a second obtaining module, configured to obtain drive motor parameters corresponding to the target drive motor, wherein the drive motor parameters comprise a motor actual torque value, a motor actual rotation speed value and a maximum energy recovery efficiency corresponding to the target drive motor; and
a second calculating module, configured to calculate the target energy recovery power corresponding to the target vehicle by substituting the motor actual torque value, the motor actual rotation speed value and the maximum energy recovery efficiency corresponding to the target drive motor into a first preset equation.

15. The apparatus of claim 13 or 14, further comprising:
a second determining unit, configured to determine the allowable thermal power and an actual thermal power corresponding to the target drive motor before the requesting unit requests the target motor controller to control the target drive motor to perform energy recovery according to the allowable thermal power corresponding to the target drive motor.

16. The apparatus of claim 15, wherein the requesting unit comprises:

a third calculating module, configured to, in a case that the allowable thermal power is greater than or equal to the actual thermal power, calculate a target energy recovery efficiency corresponding to the target drive motor by substituting the motor actual torque value, the motor actual rotation speed value and the maximum energy recovery efficiency corresponding to the target drive motor, and the allowable energy recovery power into a second preset equation; and
a first requesting module, configured to request the target motor controller to control the target drive motor to perform energy recovery according to the target energy recovery efficiency.

17. The apparatus of claim 15, wherein the requesting unit further comprises:

a second requesting module, configured to, in a case that the allowable thermal power is less than the actual thermal power, request the target motor controller to control the target drive motor to perform energy recovery according to the allowable thermal power;
a fourth calculating module, configured to calculate a target rotation speed value corresponding to a generator;
a first sending module, configured to send a fuel cut-off request to an engine controller, so that the engine controller controls the engine to cut off fuel; and
a second sending module, configured to send a rotation speed request carrying the target rotation speed value to a generator controller, so that the generator controller controls the generator to operate at the target rotation speed value.

18. A storage medium having programs stored thereon, wherein when the programs are executed, a device where the storage medium is located is controlled to implement the energy recovery control method of any one of claims 1-12.

19. An energy recovery control device, comprising a storage medium and one or more processors, wherein the storage medium is coupled to the processor, and the processor is configured to execute program instructions stored in the storage medium, and when the program instructions are executed, the energy recovery control method of any one of claims 1-12 is implemented.

20. A computer program product comprising computer programs, wherein when the computer programs are executed by a processor, the energy recovery control method of any one of claims 1-12 is implemented.

21. A computer program comprising computer program codes, wherein when the computer program codes are executed by a computer, the computer is caused to implement the energy recovery control method of any one of claims 1-12.

in response to receiving a braking request sent by a VLC module, determining an allowable energy recovery power and a target energy recovery power corresponding to a target vehicle — 101

in a case that the allowable energy recovery power is greater than or equal to the target energy recovery power, requesting a target motor controller to control a target drive motor to perform energy recovery according to its corresponding maximum energy recovery efficiency, and requesting the target motor controller to control the target drive motor to output a target braking torque — 102a

in a case that the allowable energy recovery power is less than the target energy recovery power, requesting the target motor controller to control the target drive motor to perform energy recovery according to an allowable thermal power corresponding to the target drive motor, and requesting the target motor controller to control the target drive motor to output the target braking torque — 102b

FIG. 1

in response to receiving a braking request sent by a VLC module, determining an allowable energy recovery power and a target energy recovery power corresponding to a target vehicle — 201

in a case that the allowable energy recovery power is greater than or equal to the target energy recovery power, requesting a target motor controller to control a target drive motor to perform energy recover according to its corresponding maximum energy recovery efficiency, and requesting the target motor controller to control the target drive motor to output a target braking torque — 202a

in a case that the allowable energy recovery power is less than the target energy recovery power, determining an allowable thermal power and an actual thermal power corresponding to the target drive motor — 202b

requesting the target motor controller to control the target drive motor to perform energy recovery according to the allowable thermal power corresponding to the target drive motor, and requesting the target motor controller to control the target drive motor to output the target braking torque — 203b

FIG. 2

energy recovery control apparatus

31 — first determining unit          requesting unit — 32

FIG. 3

energy recovery control
apparatus

second determining unit — 33
- third obtaining module — 331
- fifth calculating module — 332
- sixth calculating module — 333
- determining module — 334

31 — first determining unit
- 311 — first obtaining module
- 312 — first calculating module
- 313 — second obtaining module
- 314 — second calculating module

requesting unit — 32
- third calculating module — 321
- first requesting module — 322
- second requesting module — 323
- fourth calculating module — 324
- first sending module — 325
- second sending module — 326

FIG. 4

## INTERNATIONAL SEARCH REPORT

| International application No. |
|---|
| **PCT/CN2022/102523** |

| A. | CLASSIFICATION OF SUBJECT MATTER |
|---|---|

B60L 7/10(2006.01)i;  B60L 58/10(2019.01)i;  B60L 15/20(2006.01)i

According to International Patent Classification (IPC) or to both national classification and IPC

| B. | FIELDS SEARCHED |
|---|---|

Minimum documentation searched (classification system followed by classification symbols)

B60L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 北京车和家信息技术有限公司, 柳少康, 能量回收, 电机, 电动机, 发电机, 发动机, 发热, 消耗, 热能, 功率, 扭矩, 效率, recovery, motor, generator, engine, heat, energy, power, torque, efficiency

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113263918 A (BEIJING CHJ INFORMATION TECHNOLOGY CO., LTD.) 17 August 2021 (2021-08-17)<br>description, paragraphs [0105]-[0267], and figures 1-4 | 1-21 |
| X | CN 112477607 A (ZHEJIANG GEELY HOLDING GROUP CO., LTD. et al.) 12 March 2021 (2021-03-12)<br>description, paragraphs [0057]-[0113], and figures 1 and 2 | 1-6, 8-10, 13-16, 18-21 |
| Y | CN 112477607 A (ZHEJIANG GEELY HOLDING GROUP CO., LTD. et al.) 12 March 2021 (2021-03-12)<br>description, paragraphs [0057]-[0113], and figures 1 and 2 | 7, 11, 12, 17-21 |
| X | CN 112298077 A (REACH ELECTRIC FITTING (DALIAN) ELECTRIC SYSTEM CO., LTD.) 02 February 2021 (2021-02-02)<br>description, paragraphs [0062]-[0150], and figures 1-9 | 1-6, 8-10, 13-16, 18-21 |
| Y | CN 112298077 A (REACH ELECTRIC FITTING (DALIAN) ELECTRIC SYSTEM CO., LTD.) 02 February 2021 (2021-02-02)<br>description, paragraphs [0062]-[0150], and figures 1-9 | 7, 11, 12, 17-21 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 August 2022** | **14 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/102523** |

**C.    DOCUMENTS CONSIDERED TO BE RELEVANT**

| Category* | Citation of document, with indication, where appropriate, of the relevant passages | Relevant to claim No. |
|---|---|---|
| Y | CN 112622868 A (CHINA FIRST AUTOMOBILE WORKS GROUP CO., LTD.) 09 April 2021 (2021-04-09)<br>description, paragraphs [0032]-[0042], and figure 2 | 7, 11, 12, 17-21 |
| A | JP 2006197756 A (NISSAN MOTOR CO., LTD.) 27 July 2006 (2006-07-27)<br>entire document | 1-21 |

Form PCT/ISA/210 (second sheet) (January 2015)

**INTERNATIONAL SEARCH REPORT**
Information on patent family members

International application No.

**PCT/CN2022/102523**

| Patent document cited in search report | | | Publication date (day/month/year) | Patent family member(s) | | | Publication date (day/month/year) |
|---|---|---|---|---|---|---|---|
| CN | 113263918 | A | 17 August 2021 | None | | | |
| CN | 112477607 | A | 12 March 2021 | CN | 112477607 | B | 14 June 2022 |
| CN | 112298077 | A | 02 February 2021 | CN | 112298077 | B | 15 March 2022 |
| CN | 112622868 | A | 09 April 2021 | CN | 112622868 | B | 19 April 2022 |
| JP | 2006197756 | A | 27 July 2006 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110744060